Europäisches Patentamt

European Patent Office

Office européen des brevets

(11) Publication number: **0 300 818**
**A2**

## (12) EUROPEAN PATENT APPLICATION

(21) Application number: **88306769.6**

(22) Date of filing: **22.07.88**

(51) Int. Cl.4: **C 09 D 5/03**
**C 09 D 7/12**

(30) Priority: **22.07.87 AU 3275/87**

(43) Date of publication of application:
**25.01.89 Bulletin 89/04**

(84) Designated Contracting States:
**BE DE ES GB IT NL SE**

(71) Applicant: **ICI AUSTRALIA OPERATIONS PROPRIETARY LIMITED**
**ICI House 1 Nicholson Street**
**Melbourne Victoria 3000 (AU)**

(72) Inventor: **Coates, Roger Hampton**
**7 Chablis Crescent**
**Vermont South 3133 (AU)**

(74) Representative: **Johnston, Walter Paul et al**
**Imperial Chemical Industries PLC Legal Department:**
**Patents PO Box 6**
**Welwyn Garden City Herts, AL7 1HD (GB)**

(54) Powder coatings.

(57) Powder coatings may be given tribo-charging characteristics by the addition thereto of an additive which comprises aluminium oxide and/or hydroxide which has been sheared such that the additive resulting therefrom is a fine, essentially aggregate-free powder which comprises at least 5% by weight of particles of maximum particle size 0.2 micrometres.

A preferred way of achieving the particle size requirement is to add to the aluminium oxide/hydroxide prior to shearing a proportion of a fine particle extender of maximum particle size 0.2 um.

The preferred extender is fumed silica.

The additive is simply added to any powder coating composition in a quantity sufficient to confer on it the desired degree of tribo-charging characteristics.

EP 0 300 818 A2

**Description**

## POWDER COATINGS

This invention relates to powder coatings and more particularly to powder coatings wherein the powder particles are charged by friction.

A recent innovation in the application of powder coatings has been the use of friction (as opposed to electrodes) to generate electrostatic charges on powder particles which are being applied by spray. This friction charging, known to the art as tribo-charging, is achieved by forcing the particles by means of compressed air to pass through a plastics tube. The principle has been effectively applied in practice. The use of tribo-charging brings several advantages; the spray gun is free of electrodes and is therefore simpler, cheaper and safer, and tribo-charged coating powders are better able to penetrate and coat the interiors of cavities than are electrode-charged powders.

A major drawback of tribo-charging is that not all coating powders are suited to application thereby without there having been some modification of the powder. There are many powders which acquire little or no charge under tribo-charging conditions, and these can be made to work only by such modification. An example of such a modification is the incorporation in the powder of fine particle size aluminium oxide, this being incorporated by high speed dry blending or milling. This incorporation requires specialised equipment and is usually done at the powder manufacturing plant; the customer must therefore accept the consequent tribo-charging characteristics of the powder, even though they may not be exactly suited to his particular spraying equipment.

It has now being found that a particular additive combines the ability to confer excellent tribo-charging properties on coating powders with the ability to be readily incorporated into a coating powder. There is therefore provided, according to the present invention, a tribo-charging additive for powder coatings comprising one or both of aluminium oxide and aluminium hydroxide, which additive has been sheared to give a fine essentially aggregate-free powder which comprises at least 5% by weight of particles of particle size 0.2 um maximum.

There is further provided a powder coating composition capable of being applied by tribo-charging means, the composition comprising an appropriate quantity of a tribo-charging additive as hereinabove described.

There is further provided a method of preparing a tribo-charging additive of the type hereinabove described by the high speed shearing or milling together of ingredients until the resultant powder is essentially aggregate-free and comprises at least 5% by weight of particles of aprticle size 0.2 um maximum.

There is further provided a method of preparing a powder coating composition capable of being applied by tribo charging application equipment, comprising adding to the composition a quantity of an additive as hereinabove described sufficient to confer the desired degree of tribo-charging characteristics.

There is further provided a method of coating a substrate which method comprises spraying the substrate with a powder coating composition using tribo-charging equipment, the composition comprising a tribo-charging additive as hereinabove described.

There are many varieties of coating powders, for example, acrylic, epoxy and polyester, in both thermoplastic and thermosetting forms, and all can be applied by means of tribo-charging equipment, provided that an appropriate amount of the additive according to this invention is added. By "appropriate amount" is meant sufficient to confer acceptable tribo-charging properties. Because powder coating compositions of different types are so very different in the inherent tribo-charging characteristics (they range from considerable to nearly none), it is not possible to define specific amounts to be used in given circumstances. However, a person skilled in the art can readily determine how much is needed for any particular case.

The additive is prepared essentially from aluminium hydroxide, aluminium oxide or a mixture of the two. The characteristic feature of the additive of the present invention is that the hydroxide and/or oxide are/is converted to a fine, essentially aggregate-free powder at least 5% of which has a particle size of 0.2 um maximum. Although it is possible to meet these particle size requirements by using certain grades of aluminium oxide, for example, fumed grades, it has been found that, in most cases, it is not possible to achieve this with the hydroxide and/or oxide alone, and there must be added thereto prior to shearing a fine extender of particle size 0.2 um maximum. In particular, it has been found that aluminium hydroxide used without aluminium oxide must have incorporated therein some fine extender. An extender which has been found to be particularly suitable is fumed silica. It is of course possible to use more than one extender and this is embraced by the term "an extender", but this can be unnecessarily expensive, and it is preferred to use a single extender.

The level of extender should not exceed 40% by weight of the additive; above this level, a tendency to cause aggregation and consequentially lumps on the substrate has been observed.

The additive is produced by high speed shearing or milling of the aluminium oxide/hydroxide and, where present, the extender. Shear rates in mixing should be high enough to break down all aggregates. A suitable apparatus for carrying this out is a high speed internal mixer of the type commonly used in the dry blending of plastics components prior to melt compounding in the plastics industry, for example, "Diosna" (trade mark) High Speed "R" Series Mixers.

The milled additive is incorporated into the powder coating composition by simply blending it in. The quantity of additive needed varies from powder to powder, depending on the inherent tribo-charging characteristics of the individual powder, but it varies from about 0.02% - 2% by weight. The optimum levels are from 0.1 - 0.2%. Above about 0.5% an "orange peel" effect in the finished coating starts to become noticeable and above 2% this becomes unacceptable. One of the great advantages of this invention is that powder coating applicators can adjust the tribo-charging characteristics of their powders on the spot simply by adding and mixing in the additive. This permits much more precise adjustment of the tribo-charging characteristics than would be possible with a "factory packaged" powder. It also allows the tailoring of the tribo-charging characteristics of recycled powder to the desired level.

The invention is further described by reference to the following examples in which all parts are expressed by weight:

Example 1

An example illustrating the use of the invention.

10 parts of extra fine particle size (mean particle size 0.6 um) aluminium hydroxide and 2 parts of fumed silica were placed in a small high speed grinding mill and mixed for 20 seconds. The resulting powder was added to a dark brown polyester coating powder at a concentration of 0.2 percent by weight and thoroughly stirred in a fluidized bed. The mixed powder showed an increased charge/mass ratio when sprayed through a tribo-charging gun. Close visual examination of the mixed powder showed no evidence of lumps or undispersed aggregates of the additive powder, and on stoving the powder coating no film defects could be seen.

Example 2

An example according to the invention wherein extender is not used.

Example 1 was repeated except that the aluminium hydroxide and fumed silica were replaced with 12 parts of fumed aluminium oxide ("Aluox" C (trade mark) ex Degussa was used).

The resulting powder coating composition displayed the same excellent results as were observed in Example 1.

Example 3

A comparative example which is not according to the invention.

10 parts of the aluminium hydroxide of Example 1 and 2 parts of the fumed silica of Example 1 were shaken together in a plastic cup and added to the dark brown coating powder of Example 1 and thoroughly stirred in a fluidized bed. The mixed powder showed an increased charge/mass ratio when sprayed through a tribo-charging gun. Close visual examination of the mixed powder showed undispersed lumps of the powder additive. On spraying and stoving, small white lumpy defects could be seen in the film.

## Claims

1. A tribo-charging additive for powder coatings comprising one or both of aluminium oxide and aluminium hydroxide, which additive is sheared to give a fine, essentially aggregate-free powder which comprises at least 5% by weight of particles of particle size 0.2 um maximum.

2. A tribo-charging additive according to claim 1, wherein there is added to the additive prior to shearing an extender of particle size 0.2 um maximum.

3. A tribo-charging additive according to claim 1 or claim 2, wherein 40% by weight maximum of the additive is extender.

4. A tribo-charging additive according to any one of claims 1 - 3, wherein the extender is fumed silica.

5. A powder coating composition capable of being applied by tribo-charging means, the composition comprising quantity of a tribo-charging additive according to any one of claims 1 - 4 sufficient to confer on the composition on the composition the desired tribo-charging properties.

6. A powder coating composition according to claim 5, wherein the additive is present to the extent of from 0.02% - 2% by weight of the composition.

7. A powder coating composition according to claim 5, wherein the additive is present to the extent of from 0.1 - 0.2% by weight of the composition.

8. A method of preparing a tribo-charging additive according to any one of claims 1 - 4 by the high speed shearing or milling together of ingredients until the resultant powder is essentially aggregate-free and comprises at least 5% by weight of particles of particle size 0.2 um maximum.

9. A method of preparing a powder coating composition capable of being applied by tribo-charging application equipment, comprising adding to the composition a quantity of an additive according to any one of claims 1 - 4 sufficient to confer the desired degree of tribo-charging characteristics.

10. A method of coating a substrate which method comprises spraying the substrate with a powder coating composition using tribo-charging application equipment, the composition comprising a tribo-charging additive according to any one of claims 1 - 4.

11. A tribo-charging additive substantially as described with reference to Examples 1 and 2.

12. A powder coating composition substantially as described with reference to Examples 1 and 2.

13. A method of preparing a tribo-charging additive substantially as described with reference to Examples 1 and 2.

14. A method of preparing a powder coating composition capable of being applied by tribo-charging application equipment substantially as described with reference to Examples 1 and 2.

15. A method of coating a substrate substantially as described with reference to Examples 1 and 2.